# EUROPEAN PATENT APPLICATION

(11) **EP 4 015 883 A1**
(43) Date of publication of application: **22.06.2022**
(21) Application number: 21214790.4
(22) Date of filing: 15.12.2021
(51) Int. Cl.: F16K 27/06, G01F 15/00

(54) **MULTI-FUNCTION T-FITTING**

(30) Priority: 18.12.2020 US 202063127558 P
(71) Applicant: Romet Limited, Mississauga, ON L4W 2S5 (CA)
(72) Inventor: SOUDMAND-ASLI, Mohammadreza, Toronto, M4N 2R8 (CA); WANG, Xinmin, Ontario, L4W 2S5 (CA)
(74) Representative: Boult Wade Tennant LLP

(57) **Abstract**

A multi-functional fitting (106) for piping, tubing or other conduit comprises: a body (130) defining a channel between three ports; a test plug (116) at one port; and a secondary valve (120) at a second port. The test plug comprises a self-closing valve (118). The test plug is configured to receive a tip of an instrument such as a measuring probe. The secondary valve comprises a different valve configuration and is selectively operable between an open and a closed position. Coupling mechanisms are provided at the second and third ports. In an example, the coupling mechanisms are different types. The fitting may be T-shaped, Y shaped, shaped or the like. A method is provided to measure a gas property or maintain a sensor processing unit using the multi-functional fitting.

## Description

### Cross-Reference

The present application claims priority to U.S. Provisional Application No. 63/127,558 filed Dec. 18, 2020, the entire contents of which are incorporated by reference.

### Field

The present disclosure relates to piping, tubing or other conduit and more particularly to a multi-function fitting therefor, for example, a T-fitting such as for assisting with providing access to a material under flow such as for measuring or other purpose.

### Background

Piping, tubing or other conduit is useful to supply a material therethrough, for example, a fluid such as a liquid or gas. By way of example, but without limitation, natural gas is supplied via piping and meter sets, such as a positive displacement meter, is useful to measure a flow of gas. Other properties may be measured such as pressure, temperature, etc., by or in association with the meter set.

It may be assistive to provide short term, on demand access to a fluid under flow or to an interior of a meter set or tubing such as to measure a property or to inject a material into the flow, etc.

### Summary

A multi-functional fitting for piping, tubing or other conduit comprises: a body defining a channel between three ports; a test plug at one port; and a secondary valve at a second port. The test plug comprises a self-closing valve. The test plug is configured to receive a tip of an instrument such as a measuring probe. The secondary valve comprises a different valve configuration and is selectively operable between an open and a closed position. Coupling mechanisms are provided at the second a third port. In an example, the coupling mechanisms are different types. The fitting may be T-shaped, Y shaped, shaped or the like. A method is provided to measure a gas property or maintain a sensor processing unit using the multi-functional fitting.

In an embodiment, there is provided a multi-functional fitting for piping, tubing or other conduit comprising: a body defining a channel between three ports; a test plug at one port; and a secondary valve to selectively open and close a second port.

In an embodiment, the test plug comprises a self-closing valve. In an embodiment, the channel between the test plug and a third port remains open when the secondary valve is in a closed position. In an embodiment, the secondary valve comprises a different valve configuration from the test plug.

In an embodiment, the multi-functional fitting comprises a handle coupled to operate the secondary valve between an open position and a closed position. In an embodiment, the handle is lockable to prevent tampering.

In an embodiment, the test plug is configured to receive a tip of an instrument.

In an embodiment, the multi-functional fitting comprises a coupling mechanism at any of the three ports. The coupling mechanism may be any of a threaded fitting, a compression fitting and a quick release fitting.

In an embodiment, the multi-functional fitting has aT-shape.

In an embodiment, there is provided a meter set to measure a flow of fluid comprising: a meter body having a channel through which the fluid is to flow and a meter body port in communication with the channel; a sensor processing unit coupled to the meter body, the sensor processing unit configured to measure a property of the fluid; and a multi-function fitting in accordance with any one of the preceding claims, the fitting coupled to the meter body port and the sensor processing unit such that the secondary valve selectively couples fluid to the sensor processing unit and provides access to the fluid via the test plug.

In an embodiment, there is provided a method for a meter set having a multi-functional fitting, the method comprising: inserting an instrument probe into the test plug; obtaining a reading of a property; and withdrawing the instrument probe.

In an embodiment, there is provided a method for a meter set having a multi-functional fitting, the method comprising: selectively closing the secondary valve to decouple the sensor processing unit; and performing maintenance of the sensor processing unit.

### Brief Description of the Drawings

Fig. 1 is an illustration of a meter set comprising a multi-function t-fitting in accordance with a first embodiment.
Fig. 2 is an illustration of the multi-function t-fitting according to Fig. 1 shown in isolation.
Fig. 3 is a side view of the test plug with secondary valve assembly according to Fig. 2.
Fig. 4 is a cross-sectional view of Fig. 3 along the line A-A showing the self-closing valve in accordance with an embodiment.
Fig. 5 is an enlargement of a portion B of Fig. 3 showing a quick connection coupling in accordance with an embodiment.
Figs. 6A, 6B, 6C and 6D are valve disc options in accordance with embodiments.
Fig. 7 is an illustration of a multi-function t-fitting in accordance with a second embodiment.
Fig. 8 is a side view of the multi-function t-fitting of Fig. 7.
Figs. 9 and 10 are respective illustrations of a multi-function t-fitting in accordance with a third and fourth embodiment.

### Detailed Description

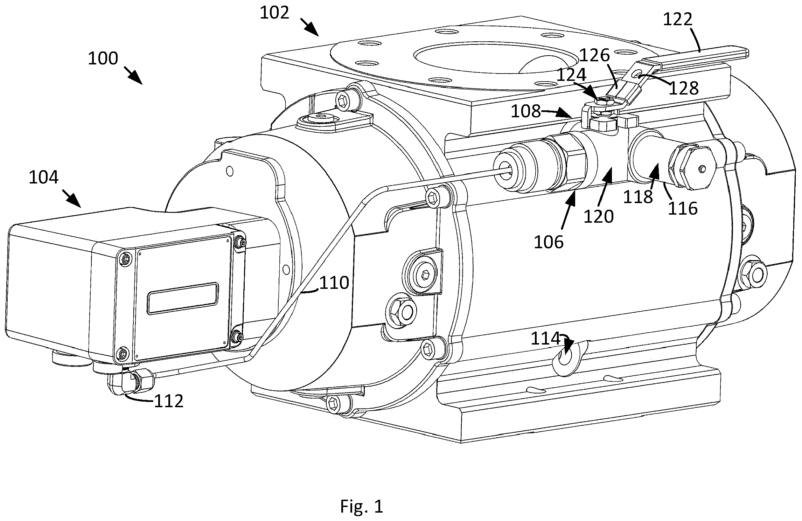

Fig. 1 is an illustration of a meter set 100. Meter set 100 comprises a meter body 102 and a processing unit 104 coupled thereto. Further coupled to the meter body 102 is a multi-function t-fitting 106 (hereinafter, sometimes referenced as "fitting 106"), in accordance with a first embodiment, coupled at an inlet-side port 108 of the body 102. Fitting 106 further couples to processing unit 104 via conduit 110 to processing unit port 112. Meter set 100, in the present embodiment, is a positive displacement rotary meter to measure gas as it flows through body 102. Inlet-side port 108 is at an inlet side of body 102 and an outlet-side port 114 is at an outlet side. In the present embodiment, a flow of gas through the meter set is from a top to a bottom of the figure. In another embodiment (not shown), gas flows in an opposite direction. In another embodiment (not shown), fitting 106 is mounted at outlet-side port 114.

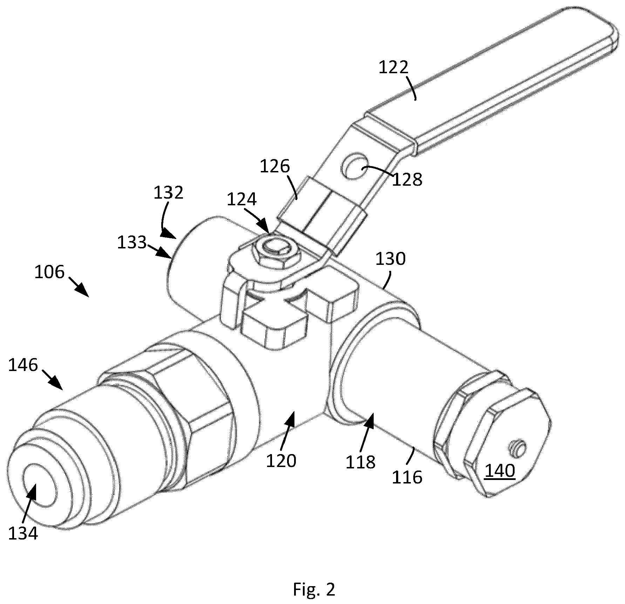

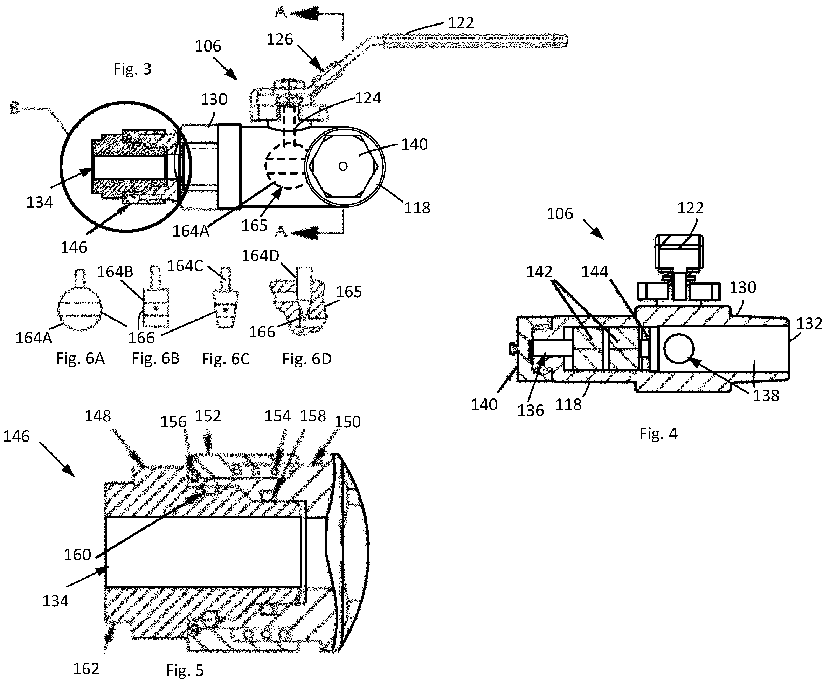

Fig. 2 is an illustration of the fitting 106, according to Fig. 1, in isolation. Fig. 3 is a side view of the fitting 106 according to Fig. 2. Fig. 4 is a cross-sectional view of Fig. 3 along the line A-A.

Multi-function t-fitting 106 comprises a test plug 116 having a self-closing valve 118 therein. Multi-function t-fitting 106 comprises a secondary valve 120. In the embodiment, secondary valve 120 is operated by a handle 122 between an open and a closed position.

In the embodiment, handle 122 is lockable and is connected to a stem 124 and provides a sliding sleeve 126 and an aperture 128 for installation of a lock (not shown) to prevent tampering and vandalism. Handle 122 is optional.

In an embodiment (not shown), multi-function t-fitting 106 is provide without handle 122. Rather an end of the stem 124 is provided with a low profile surface (e.g. a lug nut) acting as a security feature similar to security wheel locking bolt such as McGard^{™} products of McGard LLC. In some embodiments then a special tool must be used to rotate the stem.

Fig. 4 is a cross-sectional view of Fig. 3 along the line A-A showing the self-closing valve in accordance with an embodiment. Fitting 106 comprises a body 130 to house the self-closing valve 118 and secondary valve 120. Body 130 provides, in the present embodiment, a port 132 (e.g. an inlet in the present embodiment), a port 134 (a first outlet in the present embodiment) and a port 136 (a second outlet). A channel (e.g. 138) also in a T-shaped configuration extends through body 130 to couple the three ports 132, 134 and 1136 (e.g. coupling the inlet 132 to the outlets 134 and 136 and vice versa). Body 130 is T-shaped in the present embodiment. Other shapes of the body 130 and/or channel 138 may comprise a Y-shape, a 3 shape, etc. The channel 138 between the test plug 116 and port 132 remains open even when the secondary valve is in a closed position.

In the embodiment, port 132 is configured with coupling mechanism 133 comprising a ¼ NPT thread for mateable coupling with inlet-side port 109 or outlet-side port 114 of meter set 100.

In the embodiment, self-closing valve 118 at port 136 is sealed by a removable, replaceable cap 140 and self-closing valve 118 comprises a pair of rubber seals 142 (each with a self-closing slit therein) and a retaining ring 144. With cap 140 removed (not shown), self-closing valve 118 permits an instrument tip (not shown), such as a measurement probe, to be inserted through port 136 and through the dual rubber seals 142 into the T-shaped channel 138 for example, to measure pressure or temperature or other property.

Via the test plug 116, fitting 106 thus provides access to and into meter body 102, at least for a sufficiently long probe. In practice, when the meter set is in operation and an impeller therein is turning in response to the flow, an instrument tip is not inserted in the meter body.

Fig. 5 is an enlargement of a portion B of Fig. 3 showing a quick connection coupling mechanism 146 at outlet 134, in accordance with an embodiment. Coupling mechanism 146 fits a plug 148 to a socket 150 via a moveable sleeve 152 and a spring 154 between the socket 150 and sleeve 152, the sleeve is held on socket 150 by a retaining ring 156. Socket 150 provides a mount for an O-ring 158 for sealing engagement of the plug 148 and the plug 148 is further retained in socket 150 by locking balls 160 between the plug 148 and the socket 150. In the embodiment a male/female thread or compression fitting 162 is provided at the free end of plug 148.

With reference again to Fig. 3, there is shown internally to body 130, via broken lines, components of secondary valve 120 comprising a stem 124 and a disc 164A in a seat 165 inside body 130 where the disc 164A is rotatable by the stem to open or close the secondary valve 118 and thus open or close passage of fluid in channel 138 coupling inlet 132 to outlet 134.

Figs. 6A, 6B, 6C and 6D illustrate valve configuration options 164A, 164B, 164C and 164D in accordance with embodiments showing a spherical disc, cylindrical disc, tapered disc and a needle configuration respectively. The broken lines in the respective options represent a valve channel 166 therethrough. In Fig. 164D the seat 165 is shaped to accommodate the needle closure which needle travels up and down a transverse portion of the valve channel 166 that is provide by the seat 165. Thus valve channel 166 is selective coupled to permit flow of fluid from channel 138 when the valve 118 is open. For any of options 164A, 164B, and 164C for example, seat 165 is fitted to the valve body 130 and made of softer materials such as PTFE or various elastomers to provide sealing engagement with one of the disc options.

The embodiment shown and described with reference to Figs. 1-6D thus provides a self-closing valve 116 in line with input flow and a secondary output port at 136 with a quick connection 146.

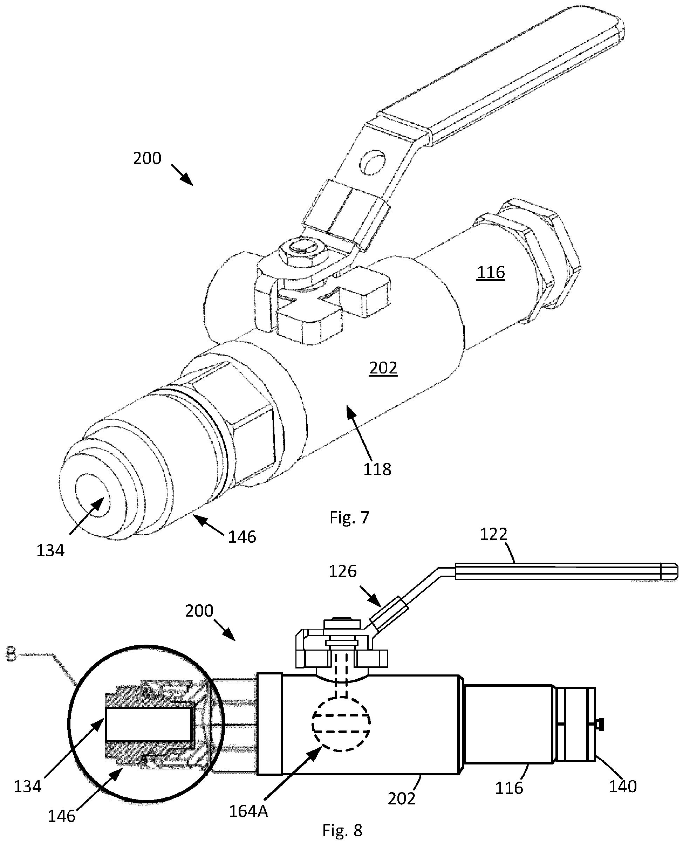

Fig. 7 is an illustration of a multi-function t-fitting 200 (hereinafter sometimes "fitting 200") in accordance with a second embodiment. Fig. 8 is a side view thereof. The embodiment shown and described with reference to Figs. 7 and 8 provides a self-closing valve 118 perpendicular to input flow and a secondary output port at 136 with quick connection coupling mechanism 146. The components of fitting 200 are substantial similar to those of multi-function t-fitting 106. It will be appreciated that body 202 has a different configuration than body 130, though is still generally T-shaped. Fig. 5 shows an enlarged portion B of the embodiment of Figs 7 and 8 as well.

Each of the self-closing valve 116 and the secondary valve 118 have a configuration in accordance with any of the embodiments as shown and described in association with the first embodiment of multi-function t-fitting 106.

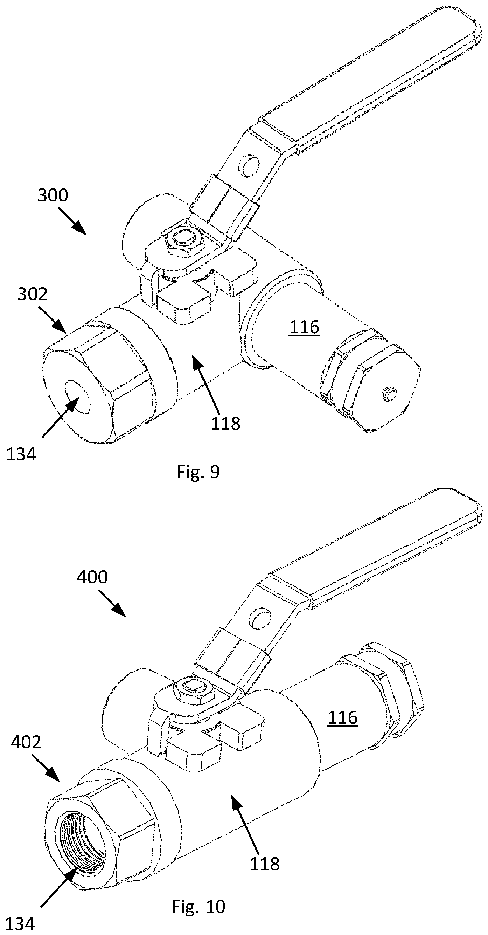

Figs. 9 and 10 are illustrations of a multi-function t-fitting 300 and multi-function t-fitting 400 in accordance with respective third and fourth embodiments. Multi-function t-fitting 300 is similar to multi-function t-fitting 106 but with a different coupling mechanism 302 at port 134. Multi-function t-fitting 400 is similar to multi-function t-fitting 200 but with a different coupling mechanism 402 at port 134. Couple mechanism 302 comprises a (female) threaded fitting and coupling mechanism 402 comprises a compression fitting. Other coupling mechanisms may be provided, for example, at ports 132 and 134 in any of the embodiments.

Though not shown, a coupling mechanism may be provided at port 136 in any of the embodiments, for example to couple a measurement instrument thereto.

Thus, in an embodiment, any of fittings 106, 200, 300 and 400 installable on inlet/outlet ports of a rotary gas meter such as meter set 100, such as to facilitate an end user to safely and easily take meter pressure and temperature readings on a pressurized gas line through a test plug - a port with a self-closing valve - saving time and money by eliminating the need for permanently installed pressure gauges and temperature indicators.

The fittings also have a secondary port that is connectable to a sensor processing unit such as AdEM-PTZ^{™} or AdEM-Tq^{™} available from Romet Limited, Mississauga, Ontario, Canada) configured to measure a property such as pressure. A secondary valve is integrated with this secondary port to be able to shut on/off the gas passageway to facilitate an installation or maintenance of the sensor processing unit.

During operation when gas is flowing through the meter, a cap on the test plug (if present) is removed, a pressure or temperature test probe is inserted through the self-closing valve (through the slits in the middle to take a reading. When the probe is removed, the two rubber seals will close automatically.

Components of the fitting may be plastic, rubber or metal (e.g. copper, brass, etc.) as is known and as is selected in accordance with a purpose or proposed installation.

Though primarily described with reference to a natural gas installation other fluid installations are contemplated such as water. A fitting herein may useful for other areas including a medical area such as for IV tubing.

Practical implementation may include any or all of the features described herein. These and other aspects, features and various combinations may be expressed as methods, apparatus, systems, means for performing functions, program products, and in other ways, combining the features described herein. A number of embodiments have been described. Nevertheless, it will be understood that various modifications can be made without departing from the spirit and scope of the processes and techniques described herein. In addition, other steps can be provided, or steps can be eliminated, from the described process, and other components can be added to, or removed from, the described apparatus or sytems. Accordingly, other embodiments are within the scope of the following claims.

Throughout the description and claims of this specification, the word " comprise", "contain" and variations of them mean " including but not limited to" and they are not intended to (and do not) exclude other components, integers or steps. Throughout this specification, the singular encompasses the plural unless the context requires otherwise. In particular, where the indefinite article is used, the specification is to be understood as contemplating plurality as well as singularity, unless the context requires otherwise.

Features, integers, characteristics, or groups described in conjunction with a particular aspect, embodiment or example of the invention are to be understood to be applicable to any other aspect, embodiment or example unless incompatible therewith. All of the features disclosed herein (including any accompanying claims, abstract and drawings), and/or all of the steps of any method or process so disclosed, may be combined in any combination, except combinations where at least some of such features and/or steps are mutually exclusive. The invention is not restricted to the details of any foregoing examples or embodiments. The invention extends to any novel one, or any novel combination, of the features disclosed in this specification (including any accompanying claims, abstract and drawings) or to any novel one, or any novel combination, of the steps of any method or process disclosed.

## Claims

1. A multi-functional fitting for piping, tubing or other conduit comprising:
a body defining a channel between three ports;
a test plug at one port; and
a secondary valve to selectively open and close a second port.

2. The multi-functional fitting according to of claim 1, wherein the test plug comprises a self-closing valve.

3. The multi-functional fitting according to claim 2, wherein the channel between the test plug and a third port remains open when the secondary valve is in a closed position.

4. The multi-functional fitting according to claim 2 or claim 3, wherein the secondary valve comprises a different valve configuration from the test plug.

5. The multi-functional fitting according to any one of claims 2 to 4, comprising a handle coupled to operate the secondary valve between an open position and a closed position.

6. The multi-functional fitting according to claim 5, wherein the handle is lockable to prevent tampering.

7. The multi-functional fitting according to any one of claims 1 to 6, wherein the test plug is configured to receive a tip of an instrument.

8. The multi-functional fitting according to any one of claims 1 to 7 comprising a coupling mechanism at each of the other two of the three ports.

9. The multi-functional fitting according to claim 8, wherein the coupling mechanism is any of a threaded fitting, a compression fitting and a quick release fitting.

10. The multi-functional fitting according to any one of claims 1 to 9 configured as a T-shape.

11. A meter set to measure a flow of fluid comprising:
a meter body having a channel through which the fluid is to flow and a meter body port in communication with the channel;
a sensor processing unit coupled to the meter body, the sensor processing unit configured to measure a property of the fluid; and
a multi-function fitting in accordance with any one of the preceding claims, the fitting coupled to the meter body port and the sensor processing unit such that the secondary valve selectively couples fluid to the sensor processing unit and provides access to the fluid via the test plug.

12. A method for a meter set in accordance with claim 11, the method comprising:
inserting an instrument probe into the test plug;
obtaining a reading of a property; and
withdrawing the instrument probe.

13. The method of claim 12 comprising:
selectively closing the secondary valve to decouple the sensor processing unit; and
performing maintenance of the sensor processing unit.
